# FASCICULE DE BREVET EUROPEEN

(11) **EP 1 877 273 B1**
(45) Date de publication et mention de la délivrance du brevet: **02.11.2011**
(21) Numéro de dépôt: 06743850.7
(22) Date de dépôt: 27.04.2006
(51) Int. Cl.: B60K 6/20

(54) **DISPOSITIF DE COMMUTATION POUR VEHICULE AUTOMOBILE ET UTILISATION DE CE DISPOSITIF**
SCHALTVORRICHTUNG FÜR EIN KRAFTFAHRZEUG UND IHRE VERWENDUNG
SWITCHING DEVICE FOR A MOTOR VEHICLE AND USE OF THIS DEVICE

(30) Priorité: 02.05.2005 FR 0551146
(43) Date de publication de la demande: 16.01.2008
(73) Titulaire: Peugeot Citroën Automobiles Société Anonyme, 78140 Velizy Villacoublay (FR)
(72) Inventeur: BELMONT, Serge, F-92100 Boulogne-billancourt (FR)
(86) Numéro de dépôt international: PCT/FR2006/050393
(87) Numéro de publication internationale: WO 2006/117493

(56) Documents cités:
- EP-A- 0 700 805
- EP-A- 1 097 830
- FR-A- 2 660 040
- FR-A- 2 783 764
- US-A- 4 019 586
- US-A- 4 096 932
- US-A1- 2002 098 941
- US-B1- 6 478 705

## Description

La présente invention concerne un dispositif de commutation pour véhicule automobile et une utilisation de ce dispositif. L'invention a notamment pour but d'assurer un changement de rapport ou de mode de fonctionnement du véhicule, ou l'engagement de deux rapports simultanés. L'invention trouve une application particulièrement avantageuse dans le domaine des véhicules hybrides, mais elle pourrait aussi être utilisée avec tout autre type de véhicule terrestre.

On connaît des dispositifs de transmission pour véhicules hybrides qui comportent un moteur thermique, deux machines électriques, et un, deux, ou plusieurs trains épicycloïdaux reliés entre eux à l'intérieur d'un ensemble mécanique. Un exemple de tels dispositifs est décrit dans la demande de brevet français FR-A-2832357. Avec ces dispositifs de transmission, la puissance du moteur thermique peut être soit transmise directement aux roues, soit dérivée en passant par une chaîne électrique. La chaîne électrique relie les machines électriques susceptibles de se comporter en moteur ou en générateur selon des valeurs d'énergies reçues électriquement et / ou mécaniquement respectivement sur leurs bornes et leur arbre. La puissance dérivée est retransmise aux roues du véhicule ou stockée le cas échéant dans un système de stockage. Cette puissance dérivée permet d'adapter précisément le couple appliqué aux roues du véhicule à celui demandé par un conducteur, tout en adaptant également précisément les couple et régime du moteur thermique de façon à optimiser son rendement.

Dans le cas où aucun système de stockage n'est relié au bus, l'énergie produite par une des machines est automatiquement consommée par l'autre machine. En variante, un système de stockage, tel qu'une batterie est relié au bus. Dans une phase de récupération particulière, les deux machines peuvent alors fonctionner simultanément en générateur, de manière à stocker le plus d'énergie possible dans la batterie. Et, dans une phase d'accélération particulière, les deux machines peuvent fonctionner simultanément en moteur, lorsque le moteur thermique est éteint.

Dans le cas particulier des transmissions à dérivation de puissance, des changements de modes permettent de choisir la source de puissance utilisée. Par exemple, dans un mode donné, un arbre, tel que l'arbre de roues est relié à un arbre d'une des machines électriques, alors que dans un autre mode, cet arbre est relié à un arbre du moteur thermique.

A cet effet, lors d'une commutation d'un mode à un autre, un arbre d'entraînement du dispositif, tel qu'un arbre d'une des sources de puissance, passe d'une liaison avec un premier pignon, relié par exemple l'arbre de roues, à une liaison avec un deuxième pignon relié par exemple à un élément de l'ensemble mécanique.

Avec un dispositif de commutation classique, lors d'une première phase de commutation, l'arbre d'entraînement est uniquement relié au premier pignon. Puis lors d'une deuxième phase de commutation, l'arbre d'entraînement n'est relié ni au premier, ni au deuxième pignon. Enfin, dans une troisième phase de commutation l'arbre d'entraînement est relié uniquement au deuxième pignon. En conséquence, un dispositif classique assure trois positions : l'un ou l'autre des pignons engagés et aucun pignon engagé.

Dans les dispositifs à dérivation de puissance, certains modes qui sont des rapports fixes permettent, comme le fait une boîte de vitesse classique, d'adapter le régime de l'arbre du moteur thermique au régime de l'arbre des roues. Pour passer d'un mode à un autre, on lie ou pas mécaniquement un arbre d'entraînement avec un pignon fou, comme cela se fait classiquement dans une boite de vitesse. Toutefois, contrairement à une boite classique, pour obtenir les modes de rapports fixes, on engage deux rapports en même temps. Ainsi, dans un exemple, pour engager un rapport fixe, l'arbre d'entraînement qui est généralement l'arbre d'une des sources de puissance est relié à deux pignons en même temps. Cet engagement de deux rapports simultanément permet de bloquer un degré de liberté de l'ensemble mécanique. Or avec les systèmes existants, l'engagement simultané de deux rapports est impossible.

On connaît, notamment du document FR 2 783 764, un système permettant d'engager deux rapports simultanément.

Toutefois un tel système présente un encombrement axial important.

L'invention se propose donc de résoudre ces problèmes d'engagement simultané de deux rapports de vitesse, avec un encombrement axial réduit.

A cet effet, l'invention propose un dispositif de transmission de puissance conforme à l'objet de la revendication 1.

Le dispositif de commutation selon l'invention comporte une géométrie telle ou est commandé de telle manière qu'il lui est possible de lier en rotation le premier et le deuxième pignon avec leur arbre simultanément ou indépendamment.

Plus précisément, ce dispositif de commutation comporte un crabot et deux pignons fous montés sur l'arbre d'entraînement. Ces deux pignons sont reliés chacun à un élément mécanique auquel est susceptible d'être lié l'arbre d'entraînement. Le crabot comporte des protubérances et les pignons comportent des saillies. Ces saillies et ces protubérances s'étendent de manière axiale par rapport à l'arbre et sont destinées à entrer en coopération les unes avec les autres.

Dans une première réalisation, on utilise un crabot monobloc, réalisé en une partie. Pour assurer une liaison simultanée des deux pignons lors d'une commutation, une longueur du crabot est supérieure à une distance entre deux pignons. Il est ainsi possible d'obtenir trois positions: l'un ou l'autre des pignons engagés et les deux pignons engagés. Dans cette réalisation pour éviter les acoups, on impose un synchronisme entre les vitesses de rotation des pignons et de l'arbre d'entraînement.

Dans une deuxième réalisation, le crabot est en deux parties et on commande indépendamment ces deux parties. Il est ainsi possible d'obtenir quatre positions : l'un ou l'autre des pignons engagés, les deux pignons engagés et aucun des deux pignons engagés. La position supplémentaire dans laquelle aucun des deux pignons n'est engagé peut être utilisée comme étape intermédiaire lors d'un changement de mode. En effet, cette position permet de réaliser un changement de mode même si des conditions de synchronisation ne sont pas remplies. En outre, cette position permet d'avoir une position point mort et de recharger une batterie du véhicule à l'arrêt.

L'exemple d'application est illustré sur les transmissions à dérivation de puissance. Mais l'invention reste utilisable dans tout type de dispositif de transmission ou système mécanique faisant intervenir l'engagement de deux rapports simultanément, ou pas.

L'invention concerne donc un dispositif de commutation pour véhicule automobile comportant deux pignons fous et un crabot,
- ce crabot assurant, par déplacement, une liaison sélective d'un arbre d'entraînement avec l'un des deux pignons,
**caractérisé en ce que** :
- le crabot comporte des protubérances pour être relié simultanément aux deux pignons, ces protubérances s'étendant parallèlement à un axe de l'arbre,
- les pignons comportant des saillies, ces saillies s'étendant parallèlement à l'axe de l'arbre,
- les protubérances étant destinées à entrer dans des espaces réalisés entre les saillies des pignons.

L'invention sera mieux comprise à la lecture de la description qui suit et à l'examen des figures qui l'accompagnent. Ces figures sont données à titre illustratif mais nullement limitatif de l'invention. Ces figures montrent :
- figure 1 : une représentation schématique d'un dispositif de transmission comportant des dispositifs de commutation selon l'invention;
- figure 2 : une représentation schématique d'un dispositif de transmission à train Ravigneaux comportant des dispositifs de transmission selon l'invention;
- figure 3 : une vue en coupe d'un dispositif de commutation selon l'invention monté sur un arbre d'une machine électrique;
- figures 4 : des vues en trois dimensions d'un dispositif de commutation selon l'invention;
- figures 5 : des vues en coupe de variantes de réalisation d'un crabot selon l'invention;
- figures 6 : des représentations schématiques d'étapes d'une commutation réalisée à l'aide d'un dispositif de commutation selon l'invention;
- figure 7 : une vue en coupe d'une variante de réalisation du dispositif de commutation selon l'invention;
- figure 8 : une vue en trois dimensions d'un agencement d'un dispositif de commutation selon l'invention.

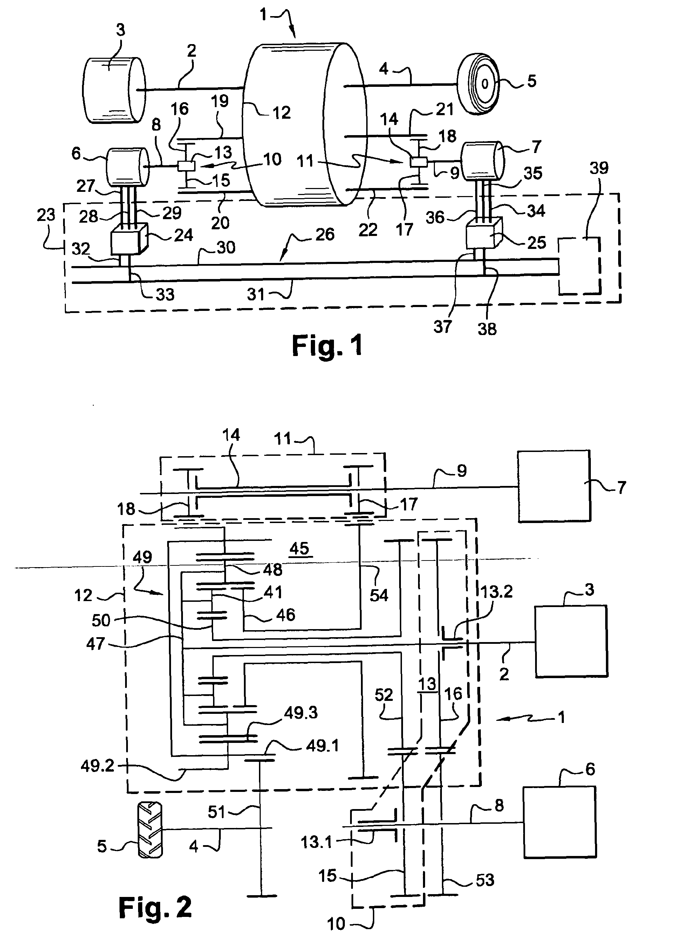

La figure 1 montre un dispositif 1 de transmission de puissance entre un arbre 2 d'un moteur 3 thermique et un arbre 4 de roues 5 d'un véhicule. Ce dispositif 1 comporte deux machines 6 et 7 électriques comportant respectivement un arbre 8 et 9. Sur ces arbres 8 et 9 est respectivement monté un dispositif de commutation 10 et 11 selon l'invention.

Plus précisément, les arbres 2, 4, 8 et 9 sont reliés entre eux par l'intermédiaire d'un ensemble 12 mécanique. Cet ensemble 12 comporte généralement deux trains épicycloïdaux ou plus. Chaque train comporte trois éléments : un planétaire, un satellite et une couronne qui engrènent mutuellement entre eux. Les trains de l'ensemble 10 sont reliés entre eux de manière à présenter deux degrés de liberté et quatre éléments mobiles en rotation auxquels on relie les arbres 2, 4, 8 et 9.

Les dispositifs 10 et 11 de commutation selon l'invention comportent chacun un crabot 13, 14 et deux pignons fous 15, 16 ou 17, 18. Les crabots 13 et 14 sont entraînés en rotation par l'arbre 8 ou 9 sur lequel ils sont accrochés. Ces crabots 13 et 14 sont accrochés soit à l'un, soit à l'autre des pignons, soit aux deux pignons en même temps. Lorsqu'un crabot est accroché à un pignon, ce crabot entraîne le pignon en rotation. Lorsqu'un pignon n'est pas relié à un crabot, ce pignon est monté fou sur l'arbre.

En conséquence, l'arbre 8 est susceptible d'être relié soit à un premier élément 19 de l'ensemble 12, soit à un deuxième élément 20 de l'ensemble 12, sot aux deux éléments 19 et 20 simultanément. Lorsque l'arbre 8 est relié au premier élément 19, le crabot 13 est engagé à l'intérieur du pignon 16, tandis que le pignon 15 est monté fou sur l'arbre 8. Lorsque l'arbre 8 est relié au deuxième élément 20, le crabot 13 est engagé à l'intérieur du pignon 15, tandis que le pignon 16 est monté fou sur l'arbre 8. Lorsque l'arbre 8 est relié au premier et au deuxième élément en même temps, le crabot 13 est engagé a la fois à l'intérieur du pignon 15 et du pignon 16.

D'une manière similaire, l'arbre 9 est susceptible d'être relié soit à un troisième élément 21 de l'ensemble 12, soit à un quatrième élément 22 de l'ensemble 12, soit aux deux éléments 21 et 22 simultanément. Lorsque l'arbre 9 est relié au troisième élément 21, le crabot 14 est engagé à l'intérieur du pignon 18, tandis que le pignon 17 est monté fou sur l'arbre 9. Lorsque l'arbre 9 est relié au quatrième élément 22, le crabot 14 est engagé à l'intérieur du pignon 17, tandis que le pignon 18 est monté fou sur l'arbre 9. Lorsque l'arbre 9 est relié au troisième et au quatrième élément 21, 22 en même temps, le crabot 14 est engagé a la fois à l'intérieur du pignon 17 et du pignon 18.

Les éléments 19-22 peuvent correspondre à un planétaire, un porte-satellites ou une couronne d'un des trains de l'ensemble 12 ou encore à des arbres de l'ensemble 12 ou du dispositif 1. Dans une réalisation particulière, le premier élément 19 correspond à l'arbre 2 du moteur 3 et le troisième élément 21 correspond à l'arbre 4 de roues 5.

Par ailleurs, les machines 6 et 7 sont reliées entre elles par l'intermédiaire d'une chaîne 23 électrique. Cette chaîne 23 comporte deux onduleurs 24 et 25 ainsi qu'un bus 26 électrique avec deux connexions 30 et 31. Plus précisément, des phases 27-29 de la première machine 6 sont reliées à l'onduleur 24 qui est lui-même relié aux connexions du bus 26 par l'intermédiaire de deux liaisons filaires 32 et 33. Des phases 34-36 de la deuxième machine 7 sont reliées à l'onduleur 25 qui est lui-même relié au bus 26 par l'intermédiaire de deux liaisons filaires 37 et 38.

Lorsqu'une des machines 6 ou 7 se comporte en générateur, des signaux de tension alternatifs observables entre ses phases 27-29 ou 34-36 sont transformés en un signal de tension continue observable sur le bus 26, par l'onduleur 24 ou 25 associé à cette machine. Lorsqu'une des machines 6 ou 7 se comporte en moteur, un signal de tension continue observable sur le bus 26 est transformé en signaux de tension alternatifs par l'onduleur 24 ou 25 associé à cette machine. Ces signaux de tension sont appliqués sur les phases de la machine qui fonctionne en moteur.

En général, lors d'une commutation, une des machines est arrêtée de manière que la puissance dissipée dans la chaîne électrique soit quasiment nulle. Le crabot peut ainsi se déplacer sans problème le long de l'arbre de l'autre machine puisque le couple observable sur cet arbre est nul.

Un dispositif de stockage 39, tel qu'une batterie ou un supercondensateur, peut être relié au bus 26.

La figure 2 montre une représentation schématique d'un dispositif 1 de transmission comportant un ensemble 12 mécanique formé d'un train 45 de type Ravigneaux et des dispositifs de commutation selon l'invention. Pour plus de simplicité, la chaîne électrique reliant les machines 6 et 7 électriques entre elles n'a pas été représentée.

Plus précisément, le train 45 présente quatre éléments mobiles auxquels on relie les arbres du dispositif 1. En effet, comme un train épicycloïdal, ce train 45 comporte un premier planétaire 46, un porte-satellites 47 portant des premiers satellites 48, et une couronne 49 qui engrènent mutuellement. En outre, le train 45 comporte des deuxièmes satellites 41, et un deuxième planétaire 50. Ces deuxièmes satellites 41 sont portés par le porte-satellites 47 et engrènent à la fois avec les premiers satellites 48 et avec le deuxième planétaire 50.

Dans cette réalisation, l'arbre 2 est relié au porte-satellites 47. Et l'arbre 4 de roues 5 est relié à la couronne 49 par l'intermédiaire d'une roue 51. A cet effet, la couronne 49 supporte deux dentures extérieures 49.1 et 49.2 et une intérieure 49.3.

L'arbre 8 est susceptible d'être relié soit au deuxième planétaire 50, soit à l'arbre 2 du moteur 3, soit au deux. A cet effet, le premier dispositif 10 de commutation comporte un crabot 13 en deux parties 13.1 et 13.2. La première partie 13.1 est reliée à l'arbre 8 de la première machine 6 tandis que la deuxième partie 13.2 est reliée à l'arbre 2 du moteur 3. Ce dispositif 10 comporte en outre le pignon fou 15 et le pignon fou 16 montés respectivement sur l'arbre 8 et l'arbre 2.

Lorsque l'arbre 8 est relié au deuxième planétaire 50, la première partie 13.1 du crabot entre en coopération avec le pignon 15, tandis que le pignon 16 est monté fou sur l'arbre 2. Ainsi, l'arbre 8 est relié au deuxième planétaire 50 par l'intermédiaire d'un engrenage formé du pignon 15 et d'une roue 52 accrochée au deuxième planétaire 50. Lorsque l'arbre 8 est relié à l'arbre 2, la deuxième partie 13.2 du crabot entre en coopération avec le pignon 16, tandis que le pignon 15 est monté fou sur l'arbre 8. Ainsi, l'arbre 8 est relié à l'arbre 2 par l'intermédiaire d'un engrenage formé du pignon 16 et d'une roue 53 accrochée directement à l'arbre 8.

Lorsque l'arbre 8 passe d'un accrochage avec le planétaire 50 à un accrochage avec l'arbre 2 et réciproquement, on annule de préférence le couple sur l'arbre 8 en annulant la vitesse de rotation de l'arbre 9.

En variante, les deux parties 13.1 et 13.2 et les pignons 15 et 16 du dispositif 10 de commutation sont montés sur l'arbre 8.

Par ailleurs, l'arbre 9 de la deuxième machine 7 est susceptible d'être relié soit à l'arbre 4 de roues 5, soit au premier planétaire 46, soit aux deux. A cet effet, le deuxième dispositif 11 de commutation comporte le pignon 17 et le pignon 18, et un crabot 14 monobloc qui sont montés sur l'arbre 9.

Lorsque l'arbre 9 est relié à l'arbre 4, le crabot 14 est engagé dans le pignon 18 et désengagé du pignon 17. L'arbre 9 est ainsi relié à l'arbre 4 par l'intermédiaire du pignon 18, de la couronne 49 et de la roue 51 accrochée à l'arbre 4. Lorsque l'arbre 9 est relié au premier planétaire 46, le crabot 14 est engagé dans le pignon 17 et désengagé du pignon 18. L'arbre 9 est ainsi relié au planétaire 46 par l'intermédiaire d'un engrenage formé du pignon 17 et de la roue 54 accrochée au planétaire 46.

Lorsque l'arbre 9 passe d'un accrochage à l'arbre 4 de roues 5 à un accrochage avec le premier planétaire 46, et réciproquement, la vitesse de rotation de l'arbre 9 est égale à la vitesse de rotation du pignon 17 et du pignon 18. Là encore, lors de cette commutation, on annule de préférence le couple observable sur l'arbre 9 en annulant la vitesse de rotation de l'arbre 8.

En variante, le crabot 14 est formé de deux parties indépendantes, comme le crabot 13, montées sur l'arbre 9. Dans cette variante, lorsque les arbres 8 et 9 ne sont accouplés avec aucun pignon, les deux machines peuvent fonctionner en générateur et recharger une batterie alors que le véhicule est à l'arrêt.

Le dispositif 1 de transmission est susceptible de fonctionner dans trois modes de fonctionnement. Dans un premier mode de fonctionnement, l'arbre 8 est relié au deuxième planétaire 50, tandis que l'arbre 9 est relié à l'arbre 4 de roues 5. Ce premier mode est notamment mis en oeuvre lors d'un décollage du véhicule, et des marche-arrières.

Dans un deuxième mode de fonctionnement, l'arbre 8 est relié au deuxième planétaire 50, tandis que l'arbre 9 est relié au premier planétaire 46. Ce deuxième mode est généralement mis en oeuvre pour des rapports de transmission moyens, plus longs que ceux du premier mode mais plus courts que ceux d'un troisième mode.

Dans le troisième mode de fonctionnement, l'arbre 8 est relié à l'arbre 2 du moteur 3, tandis que l'arbre 9 est relié au premier planétaire 46. Ce troisième mode est généralement mis en oeuvre pour des rapports de transmission plus longs que ceux utilisés dans le deuxième mode.

Dans chaque mode, les machines 6 et 7 sont susceptibles de fonctionner soit en moteur, soit en générateur.

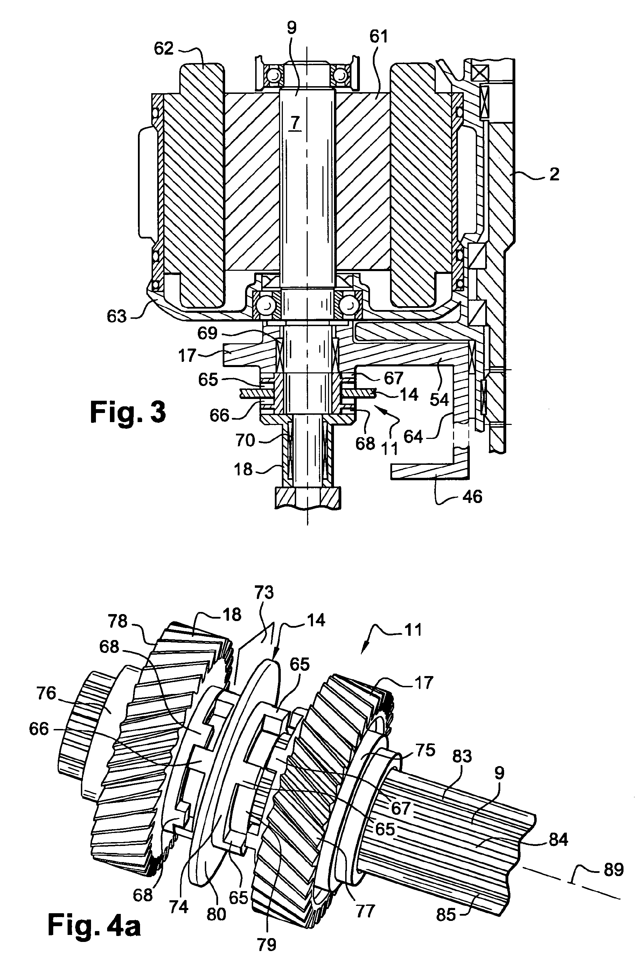

La figure 3 montre une vue en coupe du dispositif 11 de commutation selon l'invention. Comme on l'a vu, le dispositif 11 de commutation est accroché à l'arbre 9 de la machine 7 électrique. Ce dispositif 11 comporte un crabot 14 disposé entre le pignon 17 et le pignon 18. Ce pignon 17 et ce pignon 18 sont respectivement montés sur l'arbre 9 par l'intermédiaire d'un roulement 69 et 70.

Plus précisément, la machine 7 comporte un rotor 61 accroché à l'arbre 9, ainsi qu'un stator 62 annulaire qui est fixe et accroché à un bâtit 63. Le crabot 14 est entraîné en rotation par l'arbre 9, et est susceptible de se déplacer en translation le long de l'arbre 9. Le crabot 14 est ainsi susceptible de lier l'arbre 9 soit au pignon 17, soit au pignon 18, soit aux deux pignons 17 et 18 en même temps.

A cet effet, le crabot 14 comporte des protubérances 65 et 66 sur deux faces opposées l'une de l'autre et perpendiculaires à l'arbre 9. Ces protubérances 65 et 66 sont susceptibles d'entrer en coopération avec des saillies 67 et 68 des pignons 17 et 18. Ces protubérances 65, 66 et ces saillies 67, 68 sont orientées de manière axiale par rapport à l'arbre 9.

Dans une réalisation particulière, le pignon 17 engrènent avec la roue 54 qui est reliée au premier planétaire 46 par l'intermédiaire d'un arbre 64. Cet arbre 64 est creux et entoure l'arbre 2 dont seule une moitié est représentée. Le pignon 18 engrène avec la couronne 49 (non représentée).

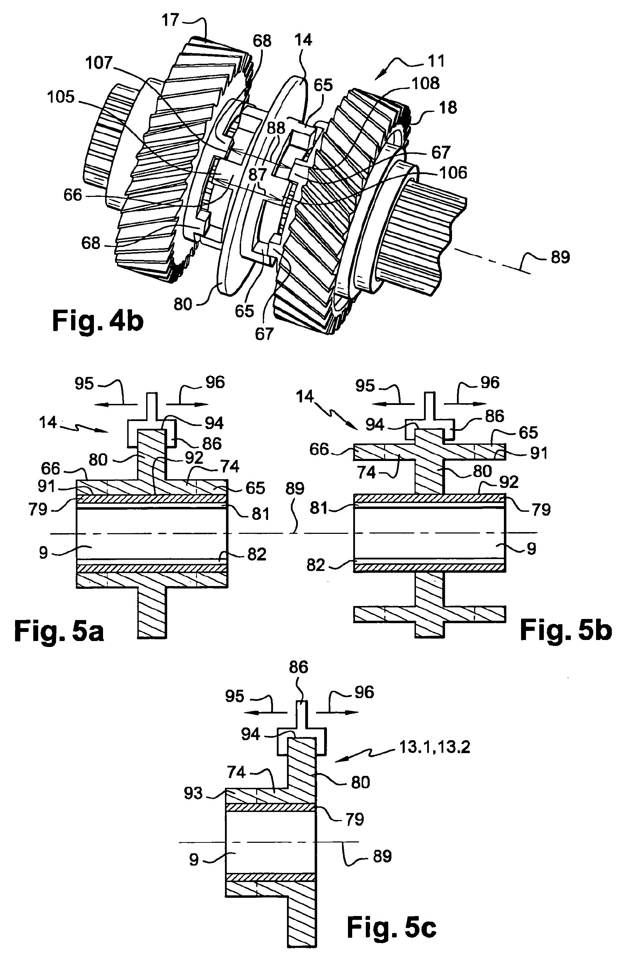

Les figures 4 montrent des vues en trois dimensions du dispositif 11 de transmission selon l'invention monté sur l'arbre 9. La figure 4a montre une vue dans laquelle le crabot 14 monobloc coopère avec le pignon 18. La figure 4b montre une vue dans laquelle le crabot 14 coopère avec les deux pignons 17 et 18 en même temps.

La vue 4a met en évidence le fait que les protubérances 65 et 66 du crabot 14 s'étendent parallèlement à un axe 89 de l'arbre 9. Les saillies 67 et 68 des pignons 17 et 18 s'étendent également parallèlement à l'arbre 9, et sont orientées de manière axiale par rapport à l'axe 89 de l'arbre 9. Les protubérances 65, 66 et les saillies 67 et 68 sont orientées les unes vers les autres. Ici, les protubérances 66 situées sur la face du crabot 14 qui débouche du côté du pignon 18 entrent en coopération avec les saillies 68 de ce pignon 18. En effet, les protubérances 66 sont engagées à l'intérieur des espaces qui séparent deux saillies successives, de manière qu'une des faces de chaque protubérance soit plaquée contre une des faces de chaque saillie, lors de la rotation de l'arbre 9.

Plus précisément, le crabot 14 comporte un anneau 74. Les protubérances 65 et 66 sont disposées autour de cet anneau 74, sur deux faces opposées de cet anneau 74 perpendiculaires à l'arbre 9. Par ailleurs, les pignons 17 et 18 comportent chacun un corps annulaire 75 et 76 auquel est accrochée une couronne 77 et 78 de dents. Une périphérie interne des couronnes 77 et 78 est accrochée à une périphérie externe des corps 75 et 76. Les saillies 67 sont disposées autour du corps 75 du pignon 17, sur une face de ce corps 75 perpendiculaire à l'arbre 9. Dans la pratique, l'anneau 74, les corps 75 et 76 et l'arbre 9 sont concentriques.

Le crabot 14 comporte en outre un moyeu 79 annulaire. Ce moyeu 79 comporte des cannelures (référencés 81 et 82 sur les figures 5) qui s'étendent de manière radiale par rapport à l'arbre 9 et qui possèdent un allongement suivant cet arbre 9. Ces cannelures 81 et 82 entrent en coopération avec des rainures 83-85 ménagées sur une périphérie de l'arbre 9. Ces rainures 83-85 possèdent chacune un creux qui s'étend de manière radiale et qui possède un allongement suivant l'arbre 9. Dans une réalisation particulière, les cannelures 81, 82 et les rainures 83-85 possèdent une forme complémentaire les uns des autres. Le crabot 14 peut ainsi être entraîné en rotation par l'arbre 9 d'entraînement, tout en étant autorisé à se déplacer en translation le long de cet arbre 9.

Dans une réalisation particulière, les rainures 83-85 se situent sur l'arbre 9, entre les faces les plus éloignées du pignon 17 et du pignon 18 qui sont perpendiculaires à l'arbre 9. Les rainures 83-85 possèdent une longueur au moins égale à la longueur du chemin sur lequel est susceptible de se déplacer le crabot 14.

En variante, l'arbre 9 comporte des cannelures qui entrent en coopération avec des rainures ménagées dans le moyeu 79. En général, les cannelures et les rainures sont disposées régulièrement autour de l'arbre 9.

En outre, le crabot 14 comporte une crête 80 de forme annulaire qui s'étend de manière radiale par rapport à l'arbre 9. Cette crête 80 est accrochée à une périphérie externe de l'anneau 74. Cette crête 80 est destinée à être reliée à une fourchette (référencée 86 sur les figures 5) qui est capable de déplacer le crabot 14 le long de l'arbre 9.

La figure 4b montre une vue en trois dimensions du dispositif 11 de commutation selon l'invention lorsque le crabot 14 entre en coopération à la fois avec le pignon 17 et le pignon 18. En effet, sur cette figure, les protubérances 65 sont engagées à l'intérieur des espaces qui séparent les saillies 67. Et les protubérances 66 sont engagées à l'intérieur des espaces qui séparent les saillies 68.

A cet effet, une première distance 87 mesurée selon un axe 89 de l'arbre 9 et séparant deux extrémités 105 et 106 longitudinales des protubérances du crabot 14 est supérieure à une deuxième distance 88 mesurée selon l'axe 89 de l'arbre 9 et séparant deux extrémités 107, 108 longitudinales des saillies 67 et 68 des deux pignons 17 et 18. Ces extrémités longitudinales sont orthogonales à l'axe 89.

En outre, les protubérances 65 et 66, et les saillies 67 et 68 possèdent une forme complémentaire les unes des autres. Ainsi, lorsqu'elles entrent en coopération, chaque protubérance 65, 66 est en contact avec la saillie 67, 68 qui lui correspond sur la plus grande surface possible. Dans une réalisation particulière, les protubérances 65 et 66 et les saillies 67 et 68 ont une forme de trapèze. Toutefois, en variante, ces protubérances et ces saillies pourraient avoir une forme de créneau ou de dent de scie.

Dans la pratique, les protubérances 65 et 66 et les saillies 67 et 68 sont espacées de manière régulière autour de l'arbre 9. En effet, un écart angulaire entre deux protubérances 65, 66 successives est le même que celui entre deux saillies 67, 68 successives. Cet écart angulaire identique permet à toutes les protubérances d'être en regard d'une saillie.

Les figures 5 montrent des variantes de réalisation du crabot 13 ou 14 selon l'invention. L'anneau 74 porte des protubérances 65 et 66 axiales.

Dans la figure 5a, l'anneau 74 est accroché au moyeu 79 et à la crête 80. Une périphérie 91 interne de l'anneau 74 est confondue avec une périphérie 92 externe du moyeu 79. Ainsi, en général, l'anneau 74 et les protubérances 65, 66 sont proches d'une périphérie de l'arbre 9. Dans une réalisation particulière, une différence entre le diamètre de l'anneau 74 et le diamètre de l'arbre 9 est inférieure à 5% du diamètre de l'arbre.

Dans la variante représentée sur la figure 5b, la périphérie 91 interne de l'anneau 74 est éloignée de la périphérie 92 externe du moyeu 79. Dans cette variante, l'anneau 74 s'étend axialement par rapport à l'arbre 9, de part et d'autre de la crête 80, entre la périphérie circulaire interne et la périphérie circulaire externe de cette crête 80. La crête 80 est alors reliée directement à une périphérie externe du moyeu 79. En conséquence, les protubérances 65, 66 sont séparées de l'axe 89 de l'arbre 9 d'une distance qui est supérieure au rayon de cet arbre 9.

Plus les protubérances 65, 66 sont éloignées de l'arbre 9, plus le couples observables à l'endroit d'un contact entre les protubérances 65, 66 et les saillies 67, 68 est grand. Donc, plus les protubérances 65, 66 sont éloignées de l'arbre 9, plus la transmission d'un couple entre le crabot 14 et un pignon est facile.

La figure 5c montre une partie 13.1 ou 13.2 du crabot 13 de la figure 2. Cette partie 13.1 ou 13.2 correspond en fait à une moitié du crabot 13 ou 14. Les protubérances 93 sont destinées uniquement à entrer en coopération avec des saillies de l'un des pignons 17 ou 18.

Les crabots 13 et 14 des figures 5 sont reliés à la fourchette 86. Cette fourchette 86 comporte une rainure 94 circulaire à l'intérieur de laquelle est positionnée la crête 80 du crabot. Cette fourchette 86 prend appui sur des rebords de la crête 80. Cette fourchette 86 est destinée à déplacer le crabot 14 en translation le long de l'arbre 9, dans les deux directions 95 et 96.

Dans la pratique, le moyeu 79, l'anneau 74, les protubérances 65, 66 et la crête 80 du crabot 14 sont moulés ou soudés ensemble.

En variante, le crabot 14 ne comporte pas d'anneau 74. Une périphérie interne de la crête 80 est alors accrochée à une périphérie externe du moyeu 79. Les protubérances sont alors accrochées directement sur un côté de la crête. Et les protubérances 65, 66 s'étendent de part et d'autre de la crête 80, ou d'un seul côté dans le cas d'un crabot en deux parties. Cette réalisation permet de rendre le crabot plus compact en raccourcissant sa longueur axiale.

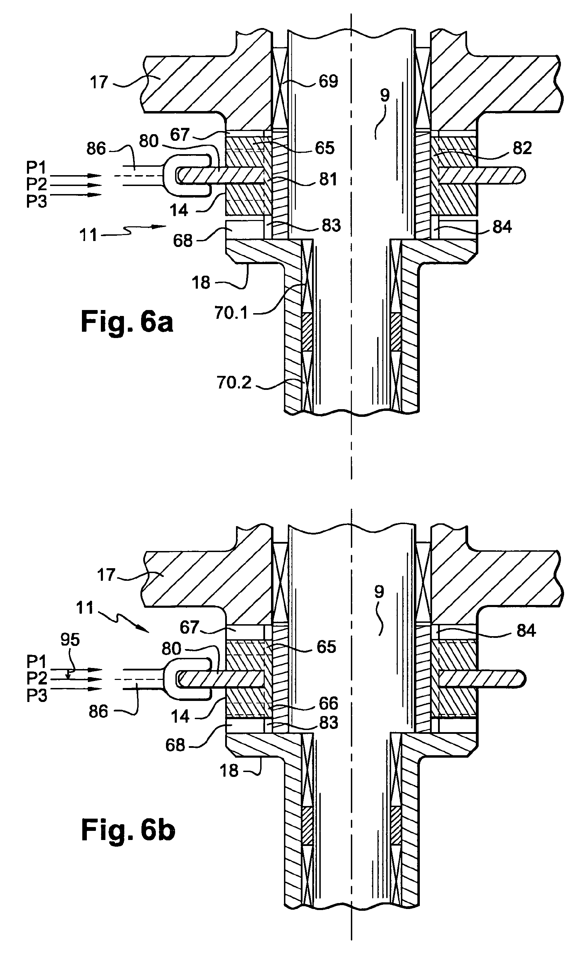

Les figures 6a-6c montrent des étapes d'une commutation réalisée à l'aide du dispositif 11 de commutation selon l'invention.

Dans une première étape représentée sur la figure 6a, le crabot 14 se trouve dans une position P1. Dans cette position P1, le crabot 14 est en prise avec le pignon 17, tandis qu'il est dégagé du pignon 18. En effet, seules les protubérances 65 du crabot 14 entrent en coopération avec les saillies 67 du pignon 17. L'arbre 9 est alors lié en rotation avec le pignon 17. Le pignon 18 est monté fou sur l'arbre par l'intermédiaire des roulements 70.1 et 70.2.

Dans une deuxième étape représentée sur la figure 6b, le crabot 14 est déplacé en translation le long de l'arbre 9 suivant la direction 95. Ce déplacement est réalisé de manière que le crabot 14 se trouve dans une position P2. Dans cette position P2, le crabot 14 est en prise à la fois avec le pignon 17 et le pignon 18. En effet, les protubérances 65 et 66 du crabot 14 entrent respectivement en coopération avec les saillies 67 et 68. L'arbre 9 est alors lié en rotation avec les deux pignons 17 et 18. Deux rapports sont alors engagés simultanément. En outre, dans cette deuxième étape, il est possible de déplacer le crabot 14 de la distance des jeux entre le crabot 14 et les pignons 17 et 18, afin de transférer l'appui du crabot 14 du pignon 17 vers le pignon 18.

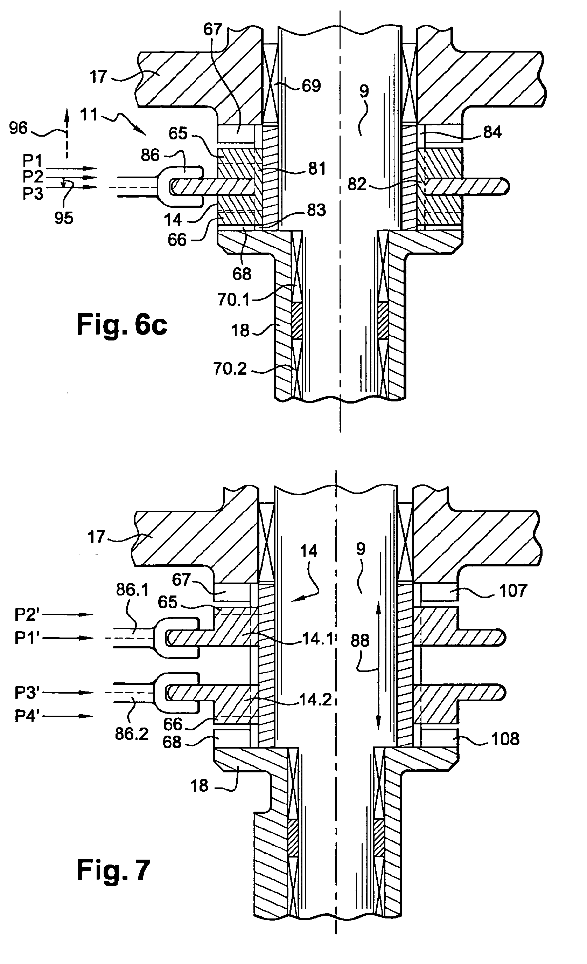

Dans une troisième étape représentée sur la figure 6c, le crabot 14 est déplacé à nouveau le long de l'arbre 9 suivant la direction 95. Ce déplacement est réalisé de manière que le crabot 14 se trouve dans une position P3. Dans cette position P3, le crabot 14 est en prise avec le pignon 18, tandis qu'il est dégagé du pignon 17. En effet, seules les protubérances 66 du crabot 14 entrent en coopération avec les saillies 68 du pignon 18. L'arbre 9 est alors lié en rotation uniquement avec le pignon 18. Le pignon 17 est alors monté fou sur l'arbre 9 par l'intermédiaire du roulement 69.

Lors de la commutation, les vitesses de rotation de l'arbre 9 et des pignons 17 et 18 sont égales, de manière à limiter les acoups. Et le couple observable sur l'arbre 9 est nul.

En général, lors d'une commutation, le déplacement du crabot 14 est réalisé de manière continue, c'est à dire à vitesse constante et sans arrêt. Bien entendu, réciproquement, le crabot 14 peut passer d'un accrochage du pignon 18 à un accrochage avec le pignon 17.

Par ailleurs, lors des déplacements du crabot 14 le long de l'arbre 9, les reliefs 81, 82 du crabot 14 réalisés dans sa périphérie interne coulissent à l'intérieur des rainures 83, 84 réalisées le long l'arbre 9.

La figure 7 montre une variante de réalisation du crabot 14. Comme le crabot 13 de la figure 2, ce crabot 14 comporte une première 14.1 et une deuxième 14.2 partie. Ces parties 14.1 et 14.2 portent respectivement les protubérances 65 et 66. Ces parties 14.1 et 14.2 sont distinctes et déplacées indépendamment l'une de l'autre. Ces parties 14.1, 14.2 sont susceptibles de se déplacer sur une distance supérieure à la distance 88 mesurée selon l'axe de l'arbre 9 et séparant deux extrémités 107, 108 longitudinales des saillies des deux pignons 17, 18.

La première partie 14.1 est susceptible d'occuper soit une position P1' dégagée, soit une position P2' engagée. Dans la position P1' dégagée, les protubérances 65 de la partie 14.1 n'entrent pas en coopération avec les saillies 67 du pignon 17. Dans la position P2' engagée, les protubérances 65 de la partie 14.1 entrent en coopération avec les saillies 64 du pignon 17.

La deuxième partie 14.2 est susceptible d'occuper soit une position P3' dégagée, soit une position P4' engagée. Dans la position P3' dégagée, les protubérances 66 de la partie 14.2 n'entrent pas en coopération avec les saillies 68 du pignon 18. Dans la position P4' engagée, les protubérances 66 de la partie 14.2 entrent en coopération avec les saillies 68 du pignon 18.

Ainsi, la première étape de la figure 6a est équivalente à une étape dans laquelle la partie 14.1 est en position P2', tandis que la partie 14.2 est en position P3'. La deuxième étape de la figure 6b est équivalente à une étape dans laquelle la partie 14.1 est en position P2', tandis que la partie 14.2 est en position P4'. La troisième étape de la figure 6c est équivalente à une étape dans laquelle la partie 14.1 est en position P1', tandis que la partie 14.2 est en position P4'.

En outre, lorsque les deux parties 14.1, 14.2 sont en position dégageé, il est possible de relier l'abre 9 à aucun des pignons 17 ou 18. Cette configuration permet de réaliser des changements de modes alors que les deux pignons possèdent des vitesses de rotation différentes. En effet, en remplaçant l'étape où l'arbre 9 est relié simultanément au deux pignons 17 et 18 par une étape où l'arbre 9 n'est relié à aucun pignon, il est possible de faire évoluer la vitesse de l'arbre 9 pour qu'une des parties 14.1 ou 14.2 atteigne la vitesse de rotation du pignon auquel elle va être reliée.

Les crabots 14.1 et 14.2 sont déplacés respectivement à l'aide d'une fourchette 86.1 et 86.2. Chaque fourchette 86.1 et 86.2 est déplacée indépendamment de l'autre par l'intermédiaire d'un moteur à courant continu.

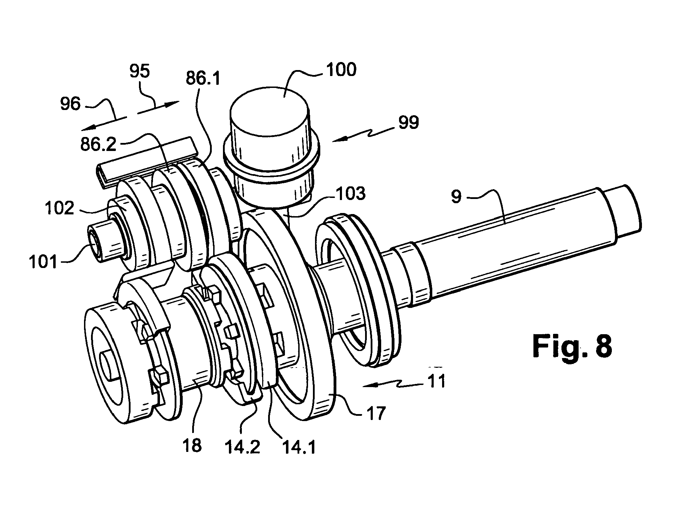

La figure 8 montre un exemple d'agencement dans l'espace du dispositif 11 de commutation selon l'invention. Dans cette figure 8, les pignons 17 et 18, ainsi que le crabot 14 en deux parties 14.1 et 14.2 sont montés sur l'arbre 9.

Plus précisément, le dispositif 11 de commutation comporte un ensemble 99 moteur comportant un moteur 100 électrique, une vis 101 sans fin et un barillet 102 qui comporte plusieurs parties susceptibles d'être déplacées indépendamment. Ce barillet 102 qui comporte un taraudage interne est monté sur la vis filetée du système 100. La fourchette 86.1 est accrochée à la fois à la partie 14.1 et au barillet 102. La fourchette 86.2 est accrochée à la fois à la partie 14.2 et au barillet 102.

Lorsque le moteur 100 tourne, il entraîne en rotation la vis 101. La rotation de cette vis a pour effet d'entraîner en translation le barillet 102 et donc la fourchette 86.1 ou 86.2. La fourchette 86.1 ou 86.2 est susceptible de déplacer la partie 14.1 ou 14.2 en translation suivant la direction 95, ou la direction 96. Le sens de la translation est fonction du sens de rotation de la vis 101.

Dans une réalisation particulière, un arbre 103 du moteur 100 est orthogonal à l'arbre 9, et la vis 101 est parallèle à l'arbre 9. En variante, l'arbre 103 est orienté parallèlement à l'arbre 9 et / ou la vis du système 101 est orientée orthogonalement à l'arbre 9.

## Revendications

1. Dispositif de transmission de puissance entre un arbre (2) d'un moteur (3) thermique et un arbre (4) de roues (5), ce dispositif comportant au moins une machine (6, 7) électrique comportant un arbre (8, 9) de machine,
- l'arbre (2) du moteur (3), l'arbre (4) de roues et l'arbre (8, 9) de machine étant reliés par l'intermédiaire d'un ensemble (12) mécanique,
- ce dispositif de transmission comportant en outre un dispositif (10, 11) de commutation comportant un crabot (14), ainsi qu'un premier (17) et un deuxième pignon (18) reliés à l'ensemble (12) mécanique,
- le crabot (14) assurant, par déplacement, une liaison sélective d'un des arbres (8, 9) du dispositif avec l'un des deux pignons,
- le crabot (14) comportant des protubérances (65, 66) s'étendant parallèlement à un axe (89) de l'arbre (9),
- les pignons (17, 18) comportant des saillies (67, 68), ces saillies (67, 68) s'étendant parallèlement à l'axe de l'arbre (9),
- les protubérances (65, 66) du crabot étant destinées à entrer dans des espaces entre les saillies (67, 68) des pignons (17, 18),
- le crabot (14) et les pignons (117, 18) étant tels qu'ils permettent l'engagement simultané du crabot (14) avec les deux pignons (17, 18), les protubérances (65, 66) du crabot pouvant entrer simultanément dans les espaces entre les saillies (68) du premier pignon (17) et dans les espaces entre les saillies (67) du deuxième pignon (18), de sorte que deux rapports du dispositif de transmission peuvent être engagés simultanément, **caractérisé en ce que** l'ensemble mécanique est formé par un train Ravigneaux (45); le dispositif de commutation étant susceptible de relier un arbre du dispositif de transmission selectivement soit avec un premier élément (49) de ce train, soit avec un deuxième élément (46) de ce train, soit avec les deux éléments simultanément.

2. Dispositif selon la revendication 1, comportant :
- des moyens pour annuler le couple d'un arbre portant le crabot lorsque les deux rapports sont engagés simultanément.

3. Dispositif selon la revendication 1 ou 2, dans lequel :
- le crabot (14) est monobloc, une première distance (87) mesurée selon l'axe (89) de l'arbre (9) et séparant deux extrémités (105, 106) longitudinales des protubérances (65, 66) étant supérieure à une deuxième distance (88) mesurée selon l'axe de marbre (9) et séparant deux extrémités (107, 108) longitudinales des saillies des deux pignons (17, 18).

4. Dispositif selon la revendication 1 ou 2, dans lequel :
- le crabot (14) est en deux parties (14.1, 14.2), chacune des parties étant déplaçable indépendamment de l'autre.

5. Dispositif selon la revendication 4, dans lequel :
- les parties (14,1, 14.2) sont susceptibles de se déplacer sur une distance supérieure à une distance (88) mesurée selon l'axe de l'arbre (9) et séparant deux extrémités (107, 108) longitudinales des saillies des deux pignons (17, 18).

6. Dispositif selon l'une des revendications 1 à 5, dans lequel :
- les saillies (67, 68) et les protubérances (65, 66) sont disposées régulièrement autour de l'arbre (9).

7. Dispositif selon l'une des revendications 1 à 6, dans lequel :
- les protubérances (65, 66) et les saillies (67, 68) possèdent une forme complémentaire en trapèze.

8. Dispositif selon l'une des revendications 1 à 7, dans lequel :
- le crabot (14) comporte un moyeu (79) annulaire, ce moyeu (79) comportant des cannelures (81, 82), ces cannelures (81, 82) s'étendant de manière radiale par rapport à l'arbre (9) et possédant un allongement suivant cet arbre (9), ces cannelures (81, 82) entrant en coopération avec des rainures (83-85) ménagées sur une périphérie de l'arbre (9), ces rainures (83-85) possédant chacune un creux, ce creux s'étendant de manière radiale et possédant un allongement suivant l'arbre (9).

9. Dispositif selon la revendication 8, dans lequel :
- le crabot (14) comporte une crête (80) annulaire qui s'étend radialement par rapport à l'arbre (9) d'entraînement, cette crête (80) étant accrochée à une périphérie externe du moyeu (79), et en ce qu'il comporte
- une fourchette (86) destinée à déplacer le crabot (14) en translation, cette fourchette (86) comportant une rainure (94) au moins en partie circulaire à l'intérieur de laquelle est positionnée la crête (80)..

10. Dispositif selon la revendication 9, dans lequel :
- les protubérances (65, 66) sont accrochées à la crête (80).

11. Dispositif selon l'une des revendications 9 à 10, dans lequel :
- la fourchette (86) est montée sur un barillet (102) comportant un taraudage, ce barillet (102) étant lui-même monté sur une vis sans fin filetée entraînée en rotation par un moteur (100) à courant continu.

12. Dispositif selon l'une des revendications 1 à 11, dans lequel:
- les protubérances (65, 66) sont séparées de l'axe (89) de l'arbre (9) d'une distance qui est supérieure au rayon de cet arbre (9).

## Claims

1. Device for power transmission between a shaft (2) of a heat engine (3) and a shaft (4) of wheels (5), this device comprising at least one electric machine (6, 7) comprising a machine shaft (8, 9),
- the shaft (2) of the engine (3), the shaft (4) of wheels and the machine shaft (8, 9) being connected by means of a mechanical assembly (12),
- this transmission device further comprising a switching device (10, 11) comprising a dog clutch (14) and also a first (17) and a second pinion (18) connected to the mechanical assembly (12),
- the dog clutch (14) ensuring, by displacement, a selective connection of one of the shafts (8, 9) of the device with one of the two pinions,
- the dog clutch (14) comprising protrusions (65, 66) extending parallel to an axis (89) of the shaft (9),
- the pinions (17, 18) comprising projections (67, 68), these projections (67, 68) extending parallel to the axis of the shaft (9),
- the protrusions (65, 66) of the dog clutch being intended to enter into the spaces between the projections (67, 68) of the pinions (17, 18),
- the dog clutch (14) and the pinions (17, 18) being such that they permit the simultaneous engagement of the dog clutch (14) with the two pinions (17, 18), the protrusions (65, 66) of the dog clutch being able to enter simultaneously into the spaces between the projections (68) of the first pinion (17) and in the spaces between the projections (67) of the second pinion (18), such that two ratios of the transmission device can be engaged simultaneously, **characterized in that** the mechanical assembly is formed by a Ravigneaux train (45), the switching device being capable of selectively connecting a shaft of the transmission device either with a first element (49) of this train, or with a second element (46) of this train, or with both elements simultaneously.

2. Device according to Claim 1, comprising:
- means to cancel the torque of a shaft carrying the dog clutch when the two ratios are engaged simultaneously.

3. Device according to Claim 1 or 2, in which:
- the dog clutch (14) is in a single piece, a first distance (87) measured along the axis (89) of the shaft (9) and separating two longitudinal ends (105, 106) of the protrusions (65, 66) being greater than a second distance (88) measured along the axis of the shaft (9) and separating two longitudinal ends (107, 108) of the projections of the two pinions (17, 18).

4. Device according to Claim 1 or 2, in which:
- the dog clutch (14) is in two parts (14.1, 14.2), each of the parts being displaceable independently of the other.

5. Device according to Claim 4, in which:
- the parts (14.1, 14.2) are capable of moving over a distance greater than a distance (88) measured along the axis of the shaft (9) and separating two longitudinal ends (107, 108) of the projections of the two pinions (17, 18).

6. Device according to one of Claims 1 to 5, in which:
- the projections (67, 68) and the protrusions (65, 66) are arranged regularly around the shaft (9).

7. Device according to one of Claims 1 to 6, in which:
- the protrusions (65, 66) and the projections (67, 68) have a complementary trapezoidal shape.

8. Device according to one of Claims 1 to 7, in which:
- the dog clutch (14) comprises an annular hub (79), this hub (79) comprising splines (81, 82), these splines (81, 82) extending radially with respect to the shaft (9) and having an extension along this shaft (9), these splines (81, 82) cooperating with grooves (83-85) arranged on a periphery of the shaft (9), these grooves (83-85) each having a depression, this depression extending radially and having an extension along the shaft (9).

9. Device according to Claim 8, in which:
- the dog clutch (14) comprises an annular ridge (80) which extends radially with respect to the drive shaft (9), this ridge (80) being attached to an external periphery of the hub (79), and in that it comprises
- a fork (86) intended to move the dog clutch (14) in translation, this fork (86) comprising an at least partially circular groove (94) in the interior of which the ridge (80) is positioned.

10. Device according to Claim 9, in which:
- the protrusions (65, 66) are attached to the ridge (80).

11. Device according to one of Claims 9 to 10, in which:
- the fork (86) is mounted on a barrel (102) having threading, this barrel (102) being itself mounted on a threaded endless screw driven in rotation by a direct current motor (100).

12. Device according to one of Claims 1 to 11, in which:
- the protrusions (65, 66) are separated from the axis (89) of the shaft (9) by a distance which is greater than the radius of this shaft (9).

## Patentansprüche

1. Kraftübertragungsvorrichtung zwischen einer Welle (2) eines Verbrennungsmotors (3) und einer Welle (4) von Rädern (5), wobei diese Vorrichtung mindestens eine Elektromaschine (6, 7) aufweist, die eine Maschinenwelle (8, 9) aufweist,
- wobei die Welle (2) des Motors (3), die Welle (4) für Räder und die Maschinenwelle (8, 9) über eine mechanische Einheit (12) verbunden sind,
- wobei diese Übertragungsvorrichtung ferner eine Vorrichtung (10, 11) zum Umschalten aufweist, die eine Klaue (14) aufweist, sowie ein erstes (17) und ein zweites Ritzel (18), die mit der mechanischen Einheit (12) verbunden sind,
- wobei die Klaue (14) durch Verlagerung eine selektive Verbindung einer der Wellen (8, 9) der Vorrichtung mit einem der zwei Ritzel sicherstellt,
- wobei die Klaue (14) Vorsprünge (65, 66) aufweist, die sich parallel zu einer Achse (89) der Welle (9) erstrecken,
- wobei die Ritzel (17, 18) Ansätze (67, 68) aufweisen, wobei sich diese Ansätze (67, 68) parallel zu der Achse der Welle (9) erstrecken,
- wobei die Vorsprünge (65, 66) der Klaue dazu bestimmt sind, in Räume zwischen den Ansätzen (67, 68) der Ritzel (17, 18) einzutreten,
- wobei die Klaue (14) und die Ritzel (17, 18) derart sind, dass sie das gleichzeitige Eingreifen der Klaue (14) in die zwei Ritzel (17, 18) erlauben, wobei die Vorsprünge (65, 66) der Klaue (14) gleichzeitig in die Räume zwischen den Vorsprüngen (68) des ersten Ritzels (17) und in den Raum zwischen den Vorsprüngen (67) des zweiten Ritzels (18) derart eintreten können, dass die zwei Gänge der Übertragungsvorrichtung gleichzeitig eingelegt werden können, **dadurch gekennzeichnet, dass** die mechanische Baugruppe aus einem Ravigneaux-Planetenradsatz (45) gebildet ist, wobei die Umschaltvorrichtung eine Welle der Übertragungsvorrichtung selektiv entweder mit einem ersten Element (49) dieses Planetenradsatzes oder mit einem zweiten Element (46) dieses Planetenradsatzes oder gleichzeitig mit den zwei Elementen verbinden kann.

2. Vorrichtung nach Anspruch 1, Folgendes aufweisend:
- Mittel zum Annullieren des Moments einer Welle, die die Klaue trägt, wenn die zwei Gänge gleichzeitig eingelegt werden.

3. Vorrichtung nach Anspruch 1 oder 2, bei der:
- die Klaue (14) einteilig ist, wobei eine erste Entfernung (87), die entlang der Achse (89) der Welle (9) gemessen wird und zwei Längsenden (105, 106) der Vorsprünge (65, 66) trennt, größer ist als eine zweite Entfernung (88), die entlang der Achse der Welle (9) gemessen wird und zwei Längsenden (107, 108) der Ansätze der zwei Ritzel (17, 18) trennt.

4. Vorrichtung nach Anspruch 1 oder 2, bei der:
- die Klaue (14) aus zwei Teilen (14.1, 14.2) besteht, wobei jeder der Teile unabhängig vom anderen verlagerbar ist.

5. Vorrichtung nach Anspruch 4, bei der:
- sich die Teile (14.1, 14.2) auf einer Entfernung verlagern können, die größer ist als eine Entfernung (88), die entlang der Achse der Welle (9) gemessen wird und zwei Längsenden (107, 108) der Ansätze der zwei Ritzel (17, 18) trennt.

6. Vorrichtung nach einem der Ansprüche 1 bis 5, bei der:
- die Ansätze (67, 68) und die Vorsprünge (65, 66) regelmäßig um die Welle (9) verteilt angeordnet sind.

7. Vorrichtung nach einem der Ansprüche 1 bis 6, bei der:
- die Vorsprünge (65, 66) und die Ansätze (67, 68) eine komplementäre Trapezform aufweisen.

8. Vorrichtung nach einem der Ansprüche 1 bis 7, bei der:
- die Klaue (14) eine ringförmige Nabe (79) aufweist, wobei diese Nabe (79) Nuten (81, 82) aufweist, wobei sich diese Nuten (81, 82) radial in Bezug zu der Welle (9) erstrecken und eine Ausdehnung entlang dieser Welle (9) besitzen, wobei die Nuten (81, 82) mit Rillen (83-85), die auf einer Peripherie der Welle (9) eingerichtet sind, in Zusammenarbeit treten, wobei diese Rillen (83-85) jeweils eine Vertiefung besitzen, wobei sich diese Vertiefung radial erstreckt und eine Ausdehnung entlang der Welle (9) besitzt.

9. Vorrichtung nach Anspruch 8, bei der:
- die Klaue (14) einen ringförmigen Scheitel (80) aufweist, der sich radial in Bezug zu der Antriebsachse (9) erstreckt, wobei dieser Scheitel (80) an einer externen Peripherie der Nabe (79) angehängt ist und Folgendes aufweist:
- eine Gabel (86), die dazu bestimmt ist, die Klaue (14) in Verschiebung zu verlagern, wobei diese Gabel (86) eine Rille (94) aufweist, die mindestens teilweise kreisförmig ist, in deren Innerem der Scheitel (80) positioniert ist.

10. Vorrichtung nach Anspruch 9, bei der:
- die Vorsprünge (65, 66) an dem Scheitel (80) angehängt sind.

11. Vorrichtung nach einem der Ansprüche 9 bis 10, bei der:
- die Gabel (86) auf eine Trommel (102) montiert ist, die ein Innengewinde aufweist, wobei diese Trommel (102) selbst auf eine Gewindeschnecke, die in Drehung von einem Gleichstrommotor (100) angetrieben wird, montiert ist.

12. Vorrichtung nach einem der Ansprüche 1 bis 11, bei der:
- die Vorsprünge (65, 66) von der Achse (89) der Welle (9) um eine Entfernung getrennt sind, die größer ist als der Radius dieser Welle (9).
